# EUROPÄISCHE PATENTSCHRIFT

(11) **EP 3 104 991 B1**
(45) Veröffentlichungstag und Bekanntmachung des Hinweises auf die Patenterteilung: **03.06.2020**
(21) Anmeldenummer: 14744468.1
(22) Anmeldetag: 28.07.2014
(51) Int. Cl.: B21H 3/04, B23G 9/00

(54) **GEWINDEROLLWERKZEUG**
THREAD ROLLING TOOL
OUTIL À ROULER LES FILETS

(30) Priorität: 13.02.2014 DE 102014202648
(43) Veröffentlichungstag der Anmeldung: 21.12.2016
(73) Patentinhaber: Silberkuhl, Philipp, 42329 Wuppertal (DE)
(72) Erfinder: Silberkuhl, Philipp, 42329 Wuppertal (DE)
(74) Vertreter: Plöger, Jan Manfred
(86) Internationale Anmeldenummer: PCT/EP2014/002053
(87) Internationale Veröffentlichungsnummer: WO 2015/120868

(56) Entgegenhaltungen:
- WO-A1-2011/044970
- CH-A- 420 031
- DE-A1- 2 944 999
- US-A- 1 983 922
- US-A- 4 942 752

## Beschreibung

Die Erfindung betrifft ein Gewinderollwerkzeug zum Rollen oder Reparieren eines Gewindes gemäß dem Oberbegriff von Anspruch 1.

Ein derartiges Gewinderollwerkzeug ist aus der US 1,983,922 A bekannt. Nachteilig an diesem Werkzeug ist, dass es zur Reparatur von Gewinden nur schlecht geeignet ist.

Aus der DE 2008 019 437 A1 ist ein Gewinderollwerkzeug bekannt, bei dem Gegenprofile verwendet werden, die ein steigungsloses Profil aufweisen, wobei ein Neigungswinkel des Profilierungswerkzeugs einstellbar ist. Es hat sich herausgestellt, dass ein solches Werkzeug beim praktischen Einsatz Probleme bereitet, da die Einstellung des Gewinderollwerkzeugs auf das jeweils vorhandene Gewinde relativ aufwändig ist.

Aus der DE 10 2009 049 580 A1 ist ein Gewinderollwerkzeug bekannt, bei dem eine Profilrolle und zwei Konterrollen aufeinander zu gestellt werden, wobei die Drehachse der Profilrolle winklig zu der Achse der Konterrollen angeordnet ist. Der Nachteil an einem derartigen Werkzeug ist, dass es für jedes zu reparierende oder zu rollende Gewinde spezifisch ausgerichtet werden muss.

In der CH 420 031 ist ein Gewinderollwerkzeug beschrieben, bei dem steigungslose Rollen von einer Seite gegen das Werkstück gedrückt werden, wobei eine der Rollen axial verschieblich ist, um einfacher in die Rille einzufädeln, die von der ersten Rolle beim Anrollen gezogen wird. Ein solches Gewinderollwerkzeug kann nicht mit der Hand betätigt werden.

Der Erfindung liegt die Aufgabe zugrunde, ein verbessertes Gewinderollwerkzeug vorzuschlagen.

Die Erfindung löst das Problem durch ein Gewinderollwerkzeug mit den Merkmalen von Anspruch 1.

Unter dem Merkmal, dass die Konterrolle axial verschieblich gelagert ist, wird verstanden, dass sie in axialer Richtung in Bezug auf ihre Drehachse bewegbar gelagert ist.

In anderen Worten ist höchstens eine Rolle axial nicht verschieblich. Unter einer Rolle wird dabei die Profilrolle oder eine Konterrolle verstanden. Vorteilhaft an der Erfindung ist, dass mit dem gleichen Gewinderollwerkzeug Gewinde unterschiedlicher Steigungen und/oder Nennweiten gerollt werden können. Durch die axiale Verschiebbarkeit können alle Rollen, nämlich die Profilrolle und die zumindest eine Konterrolle, unabhängig von der genauen Steigung und dem Durchmesser des Gewindes den Rillen des Gewindes laufen. Das erfindungsgemäße Gewinderollwerkzeug ist daher besonders universell einsetzbar.

Ein weiterer Vorteil ist, dass das Werkzeug besonders einfach zum Reparieren einsetzbar ist. Es ist nämlich ausreichend, zunächst die Profilrolle in das vorhandene Gewinde einzusetzen und danach die zumindest eine Konterrolle sachte an das vorhandene Gewinde anzusetzen. Aufgrund der axialen Verschiebbarkeit nimmt die zumindest eine Konterrolle selbsttätig die korrekte Position ein. Das erfindungsgemäße Gewinderollwerkzeug kann daher auch in schwer zugänglichen Positionen eingesetzt werden.

Im Rahmen der vorliegenden Beschreibung wird unter dem Werkzeugkörper insbesondere eine Struktur verstanden, die so stabil ist, dass beim Rollen und/oder Reparieren eines Gewindes auftretende Kräfte von den Profilrollen aufgenommen werden können.

Es ist möglich, nicht aber notwendig, dass die Profilrolle und die zumindest eine Konterrolle baugleich sind. Insbesondere unterscheiden sich die Profilrolle und die zumindest eine Konterrolle in der Regel nicht hinsichtlich ihrer Einwirkung auf das Werkstück, die Bezeichnung dient lediglich zur Unterscheidung zweier Objekte. Selbstverständlich ist es jedoch auch möglich, dass die Profilrolle und die zumindest eine Konterrolle unterschiedlich ausgebildet sind. Beispielsweise kann die zumindest eine Konterrolle mehr Rillen aufweisen als die Profilrolle.

Günstig ist es, wenn die Profilrolle und/oder die zumindest eine Konterrolle aus gehärtetem Stahl oder einem anderen harten Material aufgebaut ist. Beispielsweise ist die Profilrolle und/oder die zumindest eine Konterrolle aus einem Material aufgebaut, das eine Rockwell-Härte von zumindest 45 HRC besitzt. Diese Härte bezieht sich auf die Härte an der Oberfläche der Rolle. Es ist möglich, dass die Härte innerhalb des Bauteils geringer ist.

Vorzugsweise ist das Gewinderollwerkzeug als Handwerkzeug ausgebildet, das heißt, dass es mit einer Hand gegriffen und gegebenenfalls betätigt werden kann.

Erfindungsgemäß *ist die Profilrolle und*/*oder die zumindest eine Konterrolle axial um ein axiales Spiel verschieblich, wobei das axiale Spiel zumindest 0,25 Millimeter, insbesondere zumindest 0,4 Millimeter, beispielsweise zumindest 0,6 Millimeter beträgt. Das axiale Spiel ist der Abstand zwischen den extremen Positionen entlang der Drehachse der jeweiligen Rolle, die diese ohne plastische Verformung einnehmen kann.*

Erfindungsgemäß besitzt der Werkzeugkörper einen Grundkörper und einen Arm, wobei zumindest eine der Rollen, insbesondere die Profilrolle, am Grundkörper gelagert ist, wobei zumindest eine der Rollen, insbesondere die zumindest eine Konterrolle, am Arm befestigt ist und wobei der Arm in eine Verschlussstellung, in der der Werkzeugkörper um ein Werkstück geschlossen ist, und eine Öffnungsstellung, in welcher der Arm relativ zum Grundkörper so beweglich ist, dass das Werkstück entnehmbar ist, bringbar ist. Unter dem Merkmal, dass der Arm um das Werkstück geschlossen ist, wird insbesondere verstanden, dass ein ringförmig, wenngleich nicht notwendigerweise kreisringförmig, geschlossener Kraftfluss durch den Werkzeugkörper verläuft, der das Werkstück umschließt. Die Verbindung zwischen Arm und Grundkörper nimmt in diesem Fall zumindest einen Teil derjenigen Kraft auf, die von dem zu rollenden oder zu reparierenden Werkstück auf die Rollen ausgeübt wird. Vorteilhaft an dieser Ausführungsform ist der geringe Bauraumbedarf. Durch den geschlossenen Kraftfluss kann der Werkzeugkörper eine geringe Biegesteifigkeit aufweisen und dennoch die notwendigen Kräfte sicher aufnehmen.

Vorzugsweise schließt die Profilrolle eine Profilrollen-Drehachse, die mit der Konterrollen-Drehachse einen Versatzwinkel von höchstens 2° ein. Der Versatzwinkel ist vorzugsweise so klein wie möglich, insbesondere im Wesentlichen 0°. Das erlaubt eine einfache Fertigung des Gewinderollwerkzeugs und einfache Handhabung.

Dass der Versatzwinkel existiert, bedeutet selbstverständlich nicht, dass sich die Konterrollen-Drehachse und die Profilrollen-Drehachse schneiden. Der Versatzwinkel berechnet sich nach den mathematischen Regeln zur Winkelberechnung aus den Richtungsvektoren der vektoriellen Darstellung von Drehachse und Längsachse, wobei die Richtungsvektoren insbesondere so gewählt werden, dass der Versatzwinkel höchstens 90° beträgt. Der Versatzwinkel wird stets positiv angegeben, ein rechnerischer Winkel zwischen Drehachse und Längsachse von beispielsweise -0.5° wird daher als ein Versatzwinkel von 0,5° angesehen.

Vorzugsweise umfasst das Gewinderollwerkzeug eine zweite Konterrolle, die eine Zweitkonterrollen-Drehachse hat, die parallel zur Konterrollen-Drehachse verläuft. Unter dem Merkmal, dass die Zweitkonterrollen-Drehachse und die Konterrollen-Drehachse parallel verlaufen wird insbesondere verstanden, dass ein Winkel zwischen beiden kleiner ist als 2°, insbesondere kleiner als 1 °. Ein derartiges Gewinderollwerkzeug benötigt ein kleines Drehmoment zur Betätigung, so dass es einfach mit der Hand bedienbar ist.

Sofern das Gewinderollwerkzeug lediglich eine Konterrolle aufweist, ist es vorteilhaft, wenn es ein Konterelement aufweist, das die zum Rollen notwendige Kraft auf die Profilrolle und die eine Konterrolle aufbringt. Beispielsweise ist dieses Konterelement teilzylinderförmig und vorzugsweise gewindet.

Günstig ist es, wenn der Arm schwenkbar am Grundkörper gelagert ist. Eine schwenkbare Lagerung ermöglicht eine besonders einfache Montage des Gewinderollwerkzeugs am Werkstück. Alternativ ist es möglich, dass der Arm vollständig vom Grundkörper trennbar ausgebildet ist. Es ist dann möglich, den Arm mittels zweier Schnappverbindungen oder einer Schnappverbindung einer hintergreifenden Verbindung am Grundkörper zu befestigen.

Besonders günstig ist es, wenn der Arm mittels einer Schnappverbindung mit dem Grundkörper verbindbar ist. Das erleichtert die Befestigung des Gewinderollwerkzeugs am Werkstück, was besonders dann von Vorteil ist, wenn das Werkstück schlecht zugänglich ist.

Die Profilrolle hat ein Profilrollenprofil, das eine Steigung aufweist. Das Profilrollenprofil lässt sich insbesondere beschreiben als eine Kurve, die helikal um eine Schraubenachse geführt ist. Unter dem Merkmal, dass das Profilrollenprofil eine Steigung hat, wird insbesondere verstanden, dass ein gedachter Körper, der sich stets im Rillengrund des Profilrollenprofils entlang des Profilrollenprofils bewegt, auf einer Schraubenbahn um die Drehachse der Profilrolle verläuft.

Die Konterrolle hat insbesondere ein axiales Spiel, das zumindest der Steigung entspricht. Das stellt sicher, dass die Konterrolle für jedes denkbare Gewinde stets die notwendige axiale Position einnehmen kann.

Vorzugsweise besitzt die zumindest eine Konterrolle ein Konterrollenprofil, das die gleiche Steigung hat wie das Profilrollenprofil. Sofern zwei oder mehr Konterrollen existieren, haben vorzugsweise alle Konterrollen die gleiche Steigung wie die Profilrolle. Hierunter wird insbesondere verstanden, dass alle Rollen in einem Gewinde laufen können.

Vorteilhaft ist, wenn alle Rollen den gleichen Durchmesser haben. Die Rollen haben vorzugsweise eine zylinderförmige Grundgestalt. In anderen Worden existiert ein gedachter Zylinder, der sich von außen an die Rolle schmiegt. Gemäß einer bevorzugten Ausführungsform besitzt das Gewinderollwerkzeug eine Stellvorrichtung, insbesondere eine Stellschraube, mittels der ein Innendurchmesser eines Rollkreises einstellbar ist, wobei der Rollkreis derjenige eindeutig bestimmte Kreis ist, in den das Werkstück im Betrieb in Kontakt mit der Profilrolle und der zumindest einen Konterrolle steht. Diese Stellvorrichtung ist besonders vorteilhaft im Zusammenspiel mit einer - gemäß einer bevorzugten Ausführungsform vorgesehenen - lösbaren Verbindung zwischen dem Arm und dem Grundkörper. In diesem Fall ist es möglich, zunächst das Gewinderollwerkzeug um das Werkstück zu schließen, indem der Arm mit dem Grundkörper verbunden wird. Nachfolgend wird die Stellvorrichtung zugestellt, so dass die Profilrolle und die zumindest eine Konterrolle auf den notwendigen Positionen sind, um das Gewinde zu rollen und/oder zu reparieren.

Vorzugsweise ist zumindest eine der Profilrollen entnehmbar gelagert. In anderen Worten ist die Profilrolle entnehmbar gelagert und/oder die erste Konterrolle entnehmbar gelagert und/oder die gegebenenfalls vorhandene zweite Konterrolle entnehmbar gelagert. Das hat den Vorteil, dass eine große Vielzahl an Gewinden unterschiedlicher Steigungen und/oder Nennweiten mit dem gleichen Werkzeugsatz, der Werkzeugkörper und eine Mehrzahl Rollen umfasst, gerollt und repariert werden kann.

Im Folgenden wird die Erfindung anhand der beigefügten Zeichnungen näher erläutert. Dabei zeigt
- Figur 1: eine perspektivische Ansicht eines erfindungsgemäßen Gewinderollwerkzeugs,
- Figur 2: das Werkzeug gemäß Figur 1,
- Figur 3: das Gewinderollwerkzeug gemäß der Figuren 1 und 2, bei dem der Werkzeugkörper geschlossen ist, und
- Figur 4: eine weitere Ansicht, in der der Schnappmechanismus zu erkennen ist.

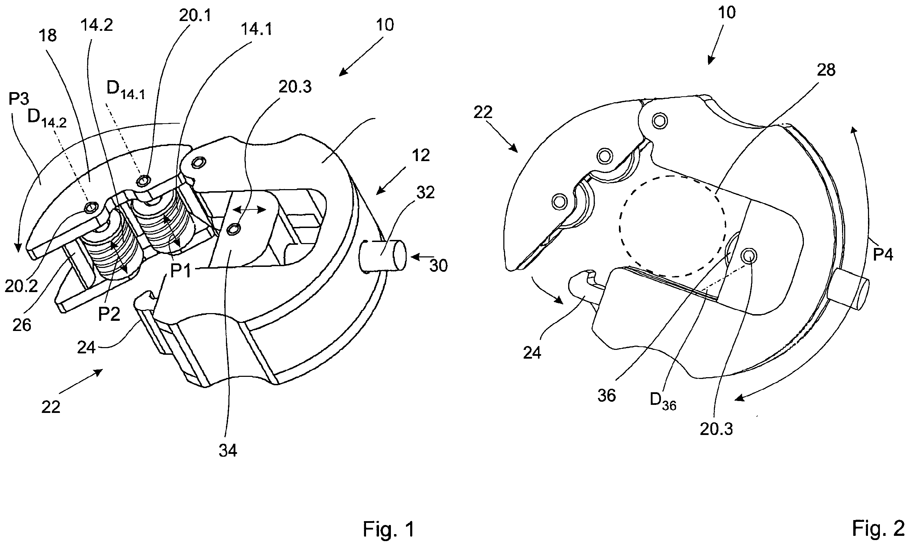

Figur 1 zeigt ein erfindungsgemäßes Gewinderollwerkzeug 10, das einen Werkzeugkörper 12, eine erste Konterrolle 14.1 und eine zweite Konterrolle 14.2 aufweist. Der Werkzeugkörper 12 umfasst einen Grundkörper 16, an dem ein Arm 18 bewegbar befestigt ist.

Der Werkzeugkörper 12 umfasst eine erste Welle 20.1, auf der die erste Konterrolle 14.1 um eine Konterrollen-Drehachse D_{14.1} drehbar gelagert ist. Im technischen Sinne parallel, also parallel im Rahmen einer vorgegebenen Toleranz, zur Konterrollen-Drehachse D_{14.1} verläuft eine Zweitkonterrollen-Drehachse D_{14.2}, um die die zweite Konterrolle 14.2 drehbar ist. Die zweite Konterrolle 14.2 ist an einer zweiten Welle 20.2 des Werkzeugkörpers 12 gelagert. Die Konterrollen 14.1, 14.2 sind an ihrer jeweiligen Welle 20.1, 20.2 axial verschieblich gelagert, wie durch die Pfeile P1 und P2 angedeutet ist.

Figur 1 zeigt, dass der Arm 18 mittels einer Schnappverbindung 22 mit dem Grundkörper 16 reversibel verbindbar ist. Dazu umfasst der Grundkörper 16 einen vorgespannten Schnapphaken 24, der ein Rastelement 26 hintergreifen kann. Im verbundenen Zustand umgeben der Arm 18 und der Grundkörper 16 einen Innenraum, in dem ein Werkstück 28 (vgl. Figur 2) angeordnet werden kann. In Figur 1 ist eine Öffnungsstellung gezeigt, bei der der Arm 18 relativ zum Grundkörper 16 so beweglich ist, dass das Werkstück entnehmbar ist.

Figur 1 zeigt zudem eine Stellvorrichtung 30, die eine Stellschraube 32 umfasst. Die Stellschraube 32 wirkt mit einem in Figur 1 nicht sichtbaren Gewinde zusammen, so dass eine dritte Welle 20.3 auf die beiden Konterrollen 14.1, 14.2 zustellbar ist. Dazu ist die dritte Welle 20.3 an einem Schlitten 34 montiert, auf den die Stellschraube 32 wirkt.

Figur 1 zeigt, dass die Konterrollen 14.1, 14.2 ein Profil besitzen, das eine Steigung hat.

Figur 2 zeigt eine andere Ansicht des Gewinderollwerkzeugs 10 gemäß Figur 1. Es ist zu erkennen, dass das Gewinderollwerkzeug 10 eine Profilrolle 36 besitzt, die um die Welle 20.3 drehbar gelagert ist. Die Profilrolle 36 besitzt eine Profilrollen-Drehachse D₃₆, die mit der Konterrollen-Drehachse D_{14.1} und/oder der Zweitkonterrollen-Drehachse D_{14.2} einen Winkel von höchstens 2° bildet. Besonders günstig ist es, wenn die drei Drehachsen mit möglichst hoher Genauigkeit parallel zueinander verlaufen.

Figur 2 zeigt schematisch ein Werkstück 28, das mit dem Gewinderollwerkzeug 10 bearbeitet werden soll. Dazu wird der Arm 18 wie durch den Pfeil P3 angedeutet geschlossen, bis die Schnappverbindung 22 einrastet. Danach wird mittels der Stellvorrichtung 30 die Profilrolle 36 zugestellt. Nachfolgend wir das Gewinderollwerkzeug 10 wie durch den Pfeil P4 gezeigt um die Längsachse des Werkstücks 28 gedreht und so ein Gewinde gerollt oder ein bereits vorhandenes Gewinde repariert.

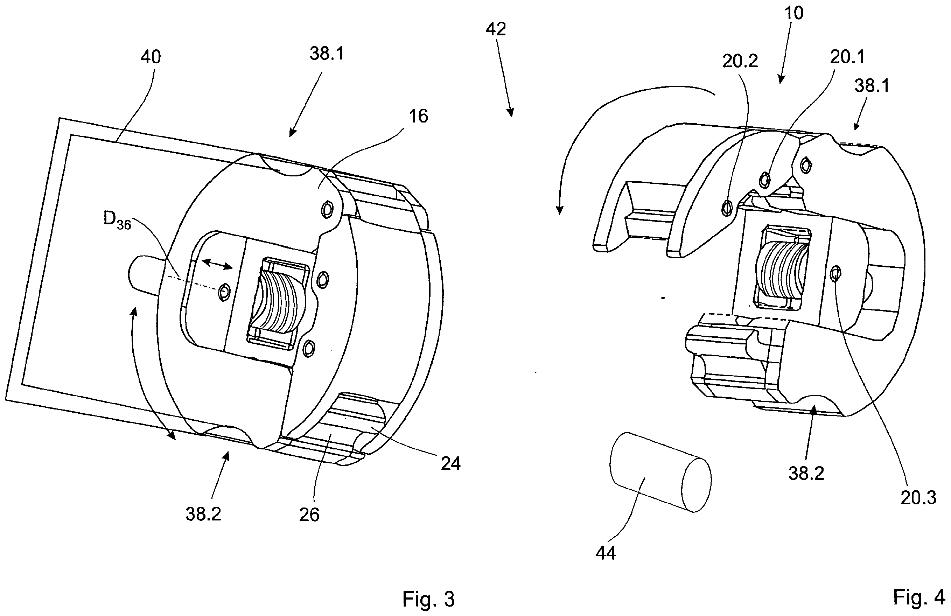

Figur 3 zeigt das Gewinderollwerkzeug 10 in geschlossenem Zustand, in dem der Arm 18 mit dem Grundkörper 16 fest verbunden ist. In diesem Zustand hintergreift der Schnapphaken 24 das Element 26. Figur 3 zeigt zudem zwei Einwölbungen 38.1, 38.2, die formschlüssig mit einem Handstück oder Adapter 40 zusammenwirken. Das Handstück 40 macht es möglich, den Grundkörper 16 in einem axialen Abstand bezüglich der Profilrollen-Drehachse D₃₆ mit der Hand oder einem Antrieb zu drehen, so dass auch schlecht zugängliche Gewinde repariert oder gerollt werden können. Die Einwölbung 38 ist eine Ausführungsform einer Koppelvorrichtung. Alternativ kann das Gewinderollwerkzeug 10 eine Bohrung oder eine sonstige Struktur aufweisen, die eine formschlüssige Verbindung mit dem Adapter 40 erlaubt.

Figur 4 zeigt eine weitere Ansicht des Gewinderollwerkzeugs 10. Die Wellen 20.1, 20.2, 20.3 sind lösbar am Werkzeugkörper befestigt, beispielsweise sind die Wellen eingeschraubt. Durch Drehen der Wellen 20.1., 20.2, 20.3, beispielsweise mit einem Sechskantschlüssel, der mit einer Innensechskant-Einsenkung in der jeweiligen Welle zusammenwirkt, kann die Welle vom Rest des Werkzeugkörpers 12 getrennt werden. Auf diese Weise können die Rollen, also die Konterrollen 14.1, 14.2 und die Profilrolle 36, getauscht werden. Es ist jedoch auch möglich, dass nicht alle Rollen tauschbar ausgebildet sind, sondern beispielsweise nur die Profilrolle.

Die Wellen 20.1, 20.2, 20.3 sowie die Rollen 14.1, 14.2, 36 sind beispielsweise aus gehärtetem Stahl hergestellt. Es ist möglich, in der Regel aber entbehrlich, dass die Rollen auf ihren jeweiligen Wellen mittels Lagern gelagert sind, beispielsweise eines Kugel- oder Nadellagers. In der Regel ist es jedoch ausreichend, wenn die Rollen nur über eine Reibverbindung mit der jeweiligen Welle in Verbindung stehen.

Figur 4 zeigt zudem schematisch einen Gewinderollwerkzeugsatz 42, der neben dem Gewinderollwerkzeug 10 zumindest eine Austauschrolle 44 umfasst, die anstelle einer der Rollen, nämlich einer der Konterrollen 14.1, 14.2 oder der Profilrolle 36, in das Gewinderollwerkzeug 10 eingebaut werden kann.

### Bezugszeichenliste

- 10: Gewinderollwerkzeug
- 12: Werkzeugkörper
- 14: Konterrolle
- 16: Grundkörper
- 18: Arm

- 20: Welle
- 22: Schnappverbindung
- 24: Schnapphaken
- 26: Rastelement
- 28: Werkstück

- 30: Stellvorrichtung
- 32: Stellschraube
- 34: Schlitten
- 36: Profilrolle
- 38: Einwölbung

- 40: Handstück/Adapter
- 42: Gewinderollwerkzeugsatz
- 44: Austauschrolle

- D_{14.1}: Konterrollen-Drehachse
- D₁₄.₂: Zweitkonterrollen-Drehachse
- D₃₆: Profilrollen-Drehachse

## Patentansprüche

1. Gewinderollwerkzeug zum Rollen und/oder Reparieren eines Gewindes, mit
(a) einem Werkzeugkörper (12),
(b) einer Profilrolle (36), die an dem Werkzeugkörper (12) gelagert ist, und
(c) zumindest einer Konterrolle (14.1), die
- eine Konterrollen-Drehachse (D_{14.1}) besitzt und
- an dem Werkzeugkörper (12) gelagert ist, wobei
(d) der Werkzeugkörper (12)
- einen Grundkörper (16) und
- einen Arm (18) aufweist,
(e) zumindest eine der Rollen (14.1, 14.2, 36) am Grundkörper (16) gelagert ist,
(f) zumindest eine der Rollen (14.1, 14.2, 36) am Arm (18) befestigt ist und
(g) der Arm (18) in
- eine Verschlussstellung, in der der Werkzeugkörper (12) um ein Werkstück (28) geschlossen ist, und
- eine Öffnungsstellung, in welcher der Arm (18) relativ zum Grundkörper (16) so beweglich ist, dass das Werkstück (28) entnehmbar ist,
bringbar ist,
**dadurch gekennzeichnet, dass**
(h) die Profilrolle (36) und/oder die zumindest eine Konterrolle (14) axial verschieblich gelagert ist und
(i) die Profilrolle (36) ein Profilrollenprofil besitzt, das eine Steigung hat.

2. Gewinderollwerkzeug nach einem der vorstehenden Ansprüche, **dadurch gekennzeichnet, dass**
(a) die Profilrolle (36) eine Profilrollen-Drehachse (D₃₆) hat und
(b) die Profilrollen-Drehachse (D₃₆) und die Konterrollen-Drehachse (D_{14.1}) einen Versatzwinkel von höchstens 2° einschließen.

3. Gewinderollwerkzeug nach einem der vorstehenden Ansprüche, **gekennzeichnet durch** eine zweite Konterrolle (14.2), die eine Zweitkonterrollen-Drehachse (D_{14.2}) hat, die parallel zur Konterrollen-Drehachse (D_{14.1}) verläuft.

4. Gewinderollwerkzeug nach einem der vorstehenden Ansprüche, **dadurch gekennzeichnet, dass** der Arm (18) mittels einer Schnappverbindung (22) mit dem Grundkörper (16) verbindbar ist.

5. Gewinderollwerkzeug nach einem der vorstehenden Ansprüche, **gekennzeichnet durch** eine Stellvorrichtung (30), mittels der ein Innendurchmesser eines Rollkreises einstellbar ist, wobei der Rollkreis derjenige eindeutig bestimmte Kreis ist, in dem das Werkstück (28) im Betrieb in Kontakt mit der Profilrolle (36) und der zumindest einen Konterrolle (14) steht.

6. Gewinderollwerkzeug nach einem der vorstehenden Ansprüche, **dadurch gekennzeichnet, dass**
- die Profilrolle (36) entnehmbar gelagert ist und/oder
- die erste Konterrolle (14.1) entnehmbar gelagert ist und/oder
- die zweite Konterrolle (14.2) entnehmbar gelagert ist.

7. Gewinderollwerkzeug nach einem der vorstehenden Ansprüche, **gekennzeichnet durch**
- eine Koppelvorrichtung (38) und
- einen Adapter (40), der zum formschlüssigen Zusammenwirken mit der Koppelvorrichtung (38), mittels der der Grundkörper (16) von einer axial beabstandeten Stelle drehbar ist.

8. Gewinderollwerkzeugsatz (42) mit
(i) einem Gewinderollwerkzeug (10) nach einem der vorstehenden Ansprüche, bei dem zumindest eine der Rollen (14.1, 14.2, 36) entnehmbar ist, und
(ii) zumindest einer Austauschrolle (44), die anstelle der Rolle (14.1, 14.2, 36) in das Gewinderollwerkzeug (10) einsetzbar ist.

## Claims

1. A thread rolling tool for rolling and/or repairing a thread with
(a) a tool body (12),
(b) a profiled roller (36) that is mounted to the tool body (12) and
(c) at least one counter roller (14.1), which
- has a counter roller rotational axis (D_{14.1}) and
- is mounted to the tool body (12),
(d) wherein the tool body (12)
- has a base body (16) and
- an arm (18),
(e) at least one of the rollers (14.1, 14.2, 36) is mounted on the base body (16),
(f) at least one of the rollers (14.1, 14.2, 36) is fixed to the arm (18) and that
(g) the arm (18) can be put in
- a locking position, in which the tool body (12) is locked around a work piece (28), and
- an opening position in which the arm (18) can be moved relative to the base board (16) in such a way that the work piece (28) can be removed,
**characterised by** the fact that
(h) the profiled roller (36) and/or the at least one counter roller (14) is mounted so that it is axially displaceable and
(i) the profiled roller (36) has a profiled roller profile that has a pitch.

2. The thread rolling tool, according to one of the above claims, **characterised by** the fact that
(a) the profiled roller (36) has a profiled roller rotational axis (D₃₆) and
(b) the profiled roller rotational axis (D₃₆) and the counter roller rotational axis (D_{14.1}) comprise a maximum offset angle of 2°.

3. The thread rolling tool according to one of the above claims, **characterised by** a second counter roller (14.2) which has a second counter roller rotational axis (D_{14.2}) that runs parallel to the counter roller rotational axis (D_{14.1}).

4. The thread rolling tool according to one of the above claims, **characterised by** the fact that the arm (18) can be connected to the base body (16) by means of a snap connection (22).

5. The thread rolling tool according to one of the above claims, **characterised by** a setting device (30), by means of which an inner diameter of a pitch circle can be adjusted, the pitch circle being the clearly defined circle in which the work piece (28) comes into contact with the profiled roller (36) and the at least one counter roller (14) during operation.

6. The thread rolling tool, according to one of the above claims, **characterised by** the fact that
- the profiled roller (36) is mounted so as to be rendered removable and/or
- the first counter roller (14.1) is mounted so as to be rendered removable and/or
- the second counter roller (14.2) is mounted so as to be rendered removable.

7. The thread rolling tool, according to one of the above claims, **characterised by**
- a coupling device (38) and
- an adapter (40) for interacting positively with the coupling device (38), by means of which the base body (16) can be rotated from an axially distanced point.

8. The thread rolling tool set (42) with
(i) a thread rolling tool (10) according to one of the above claims, with at least one of the rollers (14.1, 14.2, 36) being removable, and
(ii) at least one replacement roller (44) that can be used in the thread rolling tool (10) in place of the roller (14.1, 14.2, 36).

## Revendications

1. Outil de galetage de filet pour galeter et/ou réparer un filet,
comportant
(a) un corps d'outil (12),
(b) un galet profilé (36) monté sur le corps d'outil (12), et
(c) au moins un contre-galet (14.1) qui
- possède un axe de rotation de contre-galet (D_{14.1}) et
- est monté sur le corps d'outil (12), dans lequel
(d) le corps d'outil (12) comporte
- un corps de base (16) et
- un bras (18),
(e) l'un au moins des galets (14.1, 14.2, 36) est monté sur le corps de base (16),
(f) l'un au moins des galets (14.1, 14.2, 36) est fixé au bras (18), et
(g) le bras (18) peut être amené dans
- une position fermée dans laquelle le corps d'outil (12) est fermé autour d'une pièce à œuvrer (28), et
- une position ouverte dans laquelle le bras (18) est mobile par rapport au corps de base (16) de sorte que la pièce à œuvrer (28) puisse être enlevée, **caractérisé en ce que**
(h) le galet profilé (36) et/ou ledit au moins un contre-galet (14) sont montés de manière à pouvoir être déplacés axialement et
(i) le galet profilé (36) possède un profil de galet profilé qui présente un pas.

2. Outil de galetage de filet selon l'une des revendications précédentes, **caractérisé en ce que**
(a) le galet profilé (36) présente un axe de rotation de galet profilé (D₃₆) et
(b) l'axe de rotation de galet profilé (D₃₆) et l'axe de rotation de contre-galet (D_{14.1}) définissent un angle de décalage de 2° au maximum.

3. Outil de galetage de filet selon l'une des revendications précédentes, **caractérisé par**
un second contre-galet (14.2) qui présente un axe de rotation (D_{14.2}) qui s'étend parallèlement à l'axe de rotation de contre-galet (D_{14.1}).

4. Outil de galetage de filet selon l'une des revendications précédentes, **caractérisé en ce que**
le bras (18) peut être relié au corps de base (16) au moyen d'une liaison par encliquetage (22).

5. Outil de galetage de filet selon l'une des revendications précédentes, **caractérisé par**
un dispositif de réglage (30) permettant de régler un diamètre intérieur d'un cercle de galet, le cercle de galet étant le cercle déterminé de façon univoque dans lequel la pièce à œuvrer (28) est en contact avec le galet profilé (36) et avec ledit au moins un contre-galet (14) pendant le fonctionnement.

6. Outil de galetage de filet selon l'une des revendications précédentes, **caractérisé en ce que**
- le galet profilé (36) est monté de manière à pouvoir être enlevé et/ou
- le premier contre-galet (14.1) est monté de manière à pouvoir être enlevé et/ou
- le second contre-galet (14.2) est monté de manière à pouvoir être enlevé.

7. Outil de galetage de filet selon l'une des revendications précédentes, **caractérisé par**
- un dispositif de couplage (38) et par
- un adaptateur (40) destiné à coopérer par coopération de forme avec le dispositif de couplage (38) permettant de faire tourner le corps de base (16) depuis un emplacement axialement espacé.

8. Ensemble d'outil de galetage de filet (42) comportant
(i) un outil de galetage de filet (10) selon l'une des revendications précédentes, dans lequel l'un au moins des galets (14.1, 14.2, 36) peut être enlevé, et
(ii) au moins un galet de remplacement (44) qui peut être inséré dans l'outil de galetage de filet (10) à la place du galet (14.1, 14.2, 36).
